# EUROPÄISCHE PATENTSCHRIFT

(11) **EP 0 515 452 B1**
(45) Veröffentlichungstag und Bekanntmachung des Hinweises auf die Patenterteilung: **25.05.1994**
(21) Anmeldenummer: 91903894.3
(22) Anmeldetag: 14.02.1991
(51) Int. Cl.: B60K 17/10, E02F 9/20

(54) **ARBEITSFAHRZEUG**
UTILITY VEHICLE
VEHICULE DE TRAVAIL

(30) Priorität: 15.02.1990 DE 4004692
(43) Veröffentlichungstag der Anmeldung: 02.12.1992
(73) Patentinhaber: ZAHNRADFABRIK FRIEDRICHSHAFEN AG, 88015 Friedrichshafen (DE)
(72) Erfinder: NEMBACH, Siegfried, D-7997 Immenstaad (DE)
(86) Internationale Anmeldenummer: EP9100287
(87) Internationale Veröffentlichungsnummer: WO9112151

(56) Entgegenhaltungen:
- EP-A- 391 236
- US-A- 2 913 061
- US-A- 4 610 178

## Beschreibung

Die Erfindung betrifft Arbeitsfahrzeuge, insbesondere knickgelenkte Arbeitsfahrzeuge, mit mehreren angetriebenen Achsen gemäß dem Oberbegriff des ersten Anspruchs.

Arbeitsfahrzeuge, die zum Einsatz auf Baustellen bestimmt sind, tragen an einer Stirnseite - oftmals weit auskragend - Hebe- bzw. Fördereinrichtungen. Zum Einsatz dieser Einrichtungen sind hohe Zug- und Schubkräfte nötig, die einerseits durch Getriebe mit großem Übersetzungsverhältnis einzelner Gänge, andererseits permanentem Allradantrieb angestrebt werden.

Die Patentschrift US-A-46 10 178 beschreibt ein Arbeitsfahrzeug mit einer Schaufel einer angetriebenen Lenkachse und einer angetriebenen Hinterachse.

Die Motorleistung wird von einem Schaltgetriebe über ein Verteilergetriebe auf die Achsen übertragen. Das Verteilergetriebe erfordert Bauraum, wodurch auch die Bodenfreiheit des Kraftfahrzeuges eingeschränkt ist und erzeugt Geräusche und Kosten. Das Verteilergetriebe und das Schaltgetriebe ist zwischen den Achsen angeordnet.

Im Betrieb können Kräfte so auf die Schaufel wirken, daß die Räder der Hinterachse entlastet werden und deren verringerte Traktion die Zug- oder Schubkraft des Arbeitsfahrzeugs beeinträchtigen. Die Massen des Motors und der Schalt- bzw. Verteilergetriebe sind kompakt zwischen den Achsen angeordnet und können kein ausgleichendes Moment gegen das radentlastende Moment aus den exzentrischen Schaufelkräften erzeugen.

Aufgabe der Erfindung ist es, in einem Arbeitsfahrzeug mit mehreren angetriebenen Achsen die Achslastverteilung zu verbessern und die Leistung auf die Achsen bei größtmöglicher Bodenfreiheit und einer verringerten Anzahl an Kraftübertragungselementen zu übertragen. Der Motor soll frei wählbar, z. B. getrennt vom Getriebe, im Arbeitsfahrzeug angeordnet werden können.

Erfindungsgemäß wird dies dadurch erreicht, daß der Motor, das Getriebe und das hydrostatische Getriebe zum Gewichtsausgleich hinter der Hinterachse außerhalb der senkrechten Projektion der Aufstandsfläche der Räder angeordnet sind.

Hiermit wird eine besonders günstige Raumausnutzung und Achslastverteilung erreicht. Vorteilhaft ist dies z. B. bei Baumaschinen, die an der Frontseite mit einer Arbeitsvorrichtung versehen sind.

Um von der Sekundäreinheit raumsparend und kostengünstig beide Achsen anzutreiben, weist das Achsverteilergetriebe ein Tellerrad auf, das mit einem Ritzel des Getriebes und mit einem weiteren Ritzel zum Antrieb mit einem Tellerrad der Vorderachse in Eingriff steht. Eine Stirnzahnradpaarung bzw. ein Verteilergetriebe vom Getriebe zu den Achsen kann entfallen.

Der erfindungsgemäße Antriebsstrang für ein Arbeitsfahrzeug mit mindestens zwei angetriebenen Achsen erlaubt daher hohe Bodenfreiheit.

Der erfindungsgemäße Antriebsstrang ist besonders vorteilhaft bei knickgelenkten Arbeitsfahrzeugen.

Bei Kurvenfahrt weisen die inneren sowie die äußeren Räder angetriebener Achsen knickgelenkter Arbeitsfahrzeuge gleiche Drehzahl auf, so daß der erfindungsgemäße Antriebsstrang mit starrer Übertragung von der Sekundäreinheit des Getriebes zu den angetriebenen Achsen bei knickgelenkten Arbeitfahrzeugen nicht zu Verspannungen führt.

Außerhalb der Achsen ist die Sekundäreinheit besonders leicht zugänglich und kann besser gewartet werden.

Gemäß Anspruch 3 erlaubt ein mechanisches Lastschaltgetriebe die Vervielfachung der Übersetzung des hydrostatischen Getriebes.

Gemäß Anspruch 4 verläuft eine das Ritzel treibende Welle des Getriebes gegenüber der horizontal verlaufenden Welle zwischen den Achsen geneigt.

Es zeigt:
- Fig. 1: einen Kraftfahrzeugrahmen mit dem erfindungsgemäßen Antriebsstrang;
- Fig. 2: ein Achsverteilergetriebe für den erfindungsgemäßen Antriebsstrang.

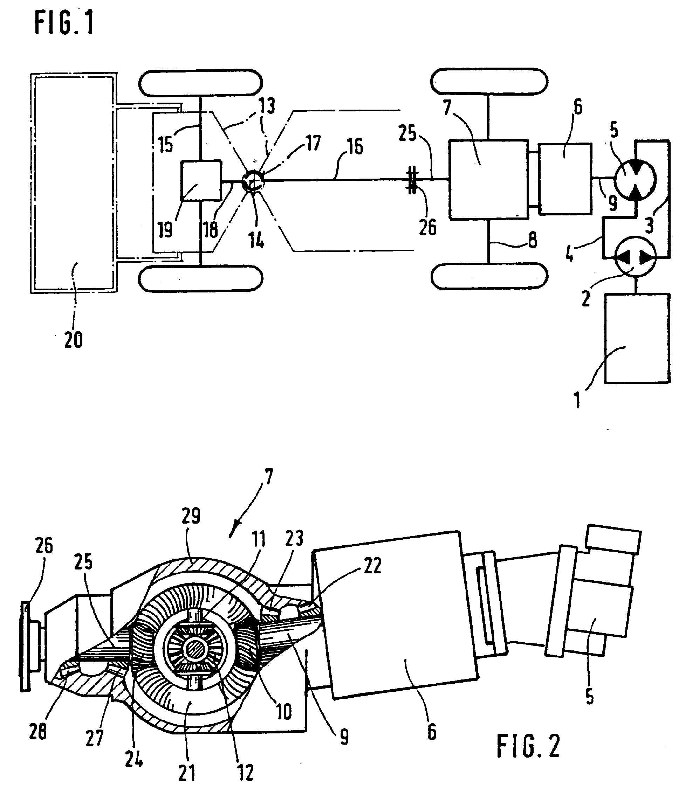

Fig. 1: Eine Brennkraftmaschine 1 treibt die Primäreinheit 2 eines hydrostatischen Getriebes an.

Druckleitungen 3, 4 führen zu einer Sekundäreinheit 5. An die Sekundäreinheit 5 schließt ein mechanisches Lastschaltgetriebe 6 an, dessen Getriebegehäuse auch das Achsverteilergetriebe 7 einer angetriebenen Achse 8 einschließt. Eine Welle 9 verbindet das Getriebe 5 bzw. 6 mit dem Achsverteilergetriebe 7.

Die Achse 8 ist an einem Rahmen 13 befestigt. Der Rahmen 13 enthält ein Knickgelenk 14. Eine angetriebene Lenkachse 15 ist am Rahmen 13 befestigt.

Vom Achsverteilergetriebe 7 führen Wellen 16, 18 über ein Kardangelenk 17 zu einem Achsverteilergetriebe 19. Am Rahmen 13 ist eine schwenkbare Erdbewegungsschaufel 20 befestigt.

Fig. 2: Lastschaltgetriebe 6 bzw. die Sekundäreinheit 5 stehen über ein Ritzel 10 auf der Welle 9 mit einem Tellerrad 21 des Achsverteilergetriebes 7 im Eingriff. Die Welle 9 ist in Kegelrollenlagern 22, 23 gelagert. Das Achsverteilergetriebe 7 enthält Ausgleichs- und Achskegelräder 11, 12 und ist mit zwei Halbwellen (nicht dargestellt) der Achse 8 verbunden.

Ebenfalls mit dem Tellerrad 21 steht im Eingriff ein Kegelritzel 24 einer Welle 25, an deren Flansch 26 die Welle 16 anschließt. Das Kegelritzel 24 ist mit zwei Kegelrollenlagern 27, 28 am Achsgehäuse 29 gehalten. Die Welle 9 ist um einen Winkel von ca. 7° geneigt zur Achse der Welle 25.

### Bezugszeichen

- 1: Brennkraftmaschine
- 2: Primäreinheit
- 3: Druckleitung
- 4: Druckleitung
- 5: Sekundäreinheit
- 6: Lastschaltgetriebe
- 7: Achsverteilergetriebe
- 8: Achse
- 9: Welle
- 10: Ritzel
- 11: Ausgleichskegelräder
- 12: Achskegelräder
- 13: Rahmen
- 14: Knickgelenk
- 15: Achse
- 16: Welle
- 17: Kardangelenk
- 18: Welle
- 19: Achsverteilergetriebe
- 20: Schaufel
- 21: Tellerrad
- 22: Kegelrollenlager
- 23: Kegelrollenlager
- 24: Kegelritzel
- 25: Welle
- 26: Flansch
- 27: Kegelrollenlager
- 28: Kegelrollenlager
- 29: Achsgehäuse

## Patentansprüche

1. Arbeitsfahrzeug, insbesondere knickgelenktes Arbeitsfahrzeug, mit einer angetriebenen Vorder- (15) und Hinterachse (8) mit Rädern, einer vor der Vorderachse (15) angeordneten Hebe- bzw. Fördereinrichtung (20), einem Motor (1), einem Getriebe (6) und einem hydrostatischen Getriebe (2, 5), dessen Sekundäreinheit (5) über das Getriebe mit einem Achsverteilergetriebe (7) der Hinterachse (8) in Antriebsverbindung steht, dadurch **gekennzeichnet,** daß der Motor (1), das Getriebe (6) und das hydrostatische Getriebe (2, 5) zum Gewichtsausgleich hinter der Hinterachse (8) außerhalb der senkrechten Projektion der Aufstandsfläche der Räder angeordnet sind.

2. Arbeitsfahrzeug nach Anspruch 1, dadurch **gekennzeichnet,** daß das Achsverteilergetriebe (7) ein Tellerrad (21) aufweist, das mit einem Ritzel (10) des Getriebes (6) und mit einem weiteren Ritzel (24) zum Antrieb mit einem Tellerrad der Vorderachse (15) in Eingriff steht.

3. Arbeitsfahrzeug nach Anspruch 1, dadurch **gekennzeichnet,** daß das Getriebe (6) ein mechanisches Lastschaltgetriebe ist.

4. Arbeitsfahrzeug nach Anspruch 1, dadurch **gekennzeichnet,** daß eine das Ritzel (10) treibende Welle (9) des Getriebes (6) gegenüber der horizontal verlaufenden Welle (25) zwischen den Achsen (8, 15) geneigt verläuft.

## Claims

1. A utility vehicle, especially an articulated utility vehicle having driven front (15) and rear (8) axles with wheels, with a lifting or conveyer arrangement (20) arranged forward of the front axle (15) and an engine (1), transmission (6) and a hydrostatic drive (2, 5), the secondary unit (5) of which is driveably connected to an axle transfer gearbox (7) on the rear axle (8) by means of the transmission (6),
**characterized in that,**
in order to achieve a balanced weight distribution, the engine (1), the transmission (6) and the hydrostatic drive (2, 5) are all located to the rear of the rear axle (8) beyond the vertical projection of the area covered by the wheels.

2. Utility vehicle in accordance with claim 1,
**characterized in that,**
the axle transfer gearbox (7) incorporates a spur bevel gear (21) which engages with a bevel pinion (10) in the transmission (6) and also engages with another bevel pinion (24) in mesh with a spur bevel gear in order to drive the front axle (15).

3. Utility vehicle in accordance with claim 1,
**characterized in that,**
the transmission (6) is a mechanical powershift transmission.

4. Utility vehicle in accordance with claim 1,
**characterized in that,**
a shaft (9) from the transmission (6) which drives the bevel pinion (10) runs at an angle to the horizontal shaft (25) and is opposite to it.

## Revendications

1. Véhicule de travail, en particulier véhicule de travail à direction pivotante au centre, avec un pont avant (15) et un pont arrière (8) entraînés avec des roues, un dispositif de levage, voire de transport (20), disposé avant le pont avant (15), un moteur (1), une boîte de vitesses (6) et une transmission hydrostatique (2, 5) dont l'unité secondaire (5) est, par la boîte, en liaison d'entraînement avec une boîte-pont de transfert (7) du pont arrière (8), **caractérisé** en ce que le moteur (1), la boîte (6) et la transmission hydrostatique 2, 5) soient, pour l'équilibrage du poids, disposés derrière le pont arrière (8), au-delà de la projection verticale de la surface de contact au sol des roues.

2. Véhicule de travail selon la revendication 1,
**caractérisé** en ce que la boîte-pont de transfert (7) présente une couronne dentée (21) qui engrène avec une couronne dentée du pont avant (15) par un pignon (10) de la boîte de vitesses (6) et par un autre pignon (24) pour assurer l'entraînement.

3. Véhicule de travail selon la revendication 1,
**caractérisé** en ce que la boîte (6) soit une boîte mécanique couplable sous charge.

4. Véhicule de travail selon la revendication 1,
**caractérisé** en ce qu'un arbre (9) de la boîte (6) entraînant le pignon (10) soit placé de façon inclinée entre les ponts (8, 15) par rapport à l'arbre (25) disposé horizontalement.
